## Europäisches Patentamt
## European Patent Office
## Office européen des brevets

(19)

(11) Veröffentlichungsnummer : **0 170 187**
**B1**

(12)

# EUROPÄISCHE PATENTSCHRIFT

(45) Veröffentlichungstag der Patentschrift :
**20.01.88**

(51) Int. Cl.⁴ : **F 16 H 53/02, F 16 D 1/06**

(21) Anmeldenummer : **85109153.8**

(22) Anmeldetag : **22.07.85**

(54) Verfahren zum Befestigen von Antriebselementen auf einer zylindrischen Welle.

(30) Priorität : 03.08.84 DE 3428733

(43) Veröffentlichungstag der Anmeldung :
**05.02.86 Patentblatt 86/06**

(45) Bekanntmachung des Hinweises auf die Patenterteilung : **20.01.88 Patentblatt 88/03**

(84) Benannte Vertragsstaaten :
**AT BE CH DE FR GB IT LI LU NL SE**

(56) Entgegenhaltungen :
DE-A- 1 479 745
DE-A- 2 914 095
DE-C-   682 168
FR-A- 2 541 720
GB-A- 1 117 816
US-A- 3 012 799
US-A- 4 343 563

(73) Patentinhaber : **INTERATOM Gesellschaft mit beschränkter Haftung**
**Friedrich-Ebert-Strasse**
**D-5060 Bergisch Gladbach 1 (DE)**

(72) Erfinder : **Maus, Wolfgang, Dipl.-Ing.**
**Gut Horst**
**D-5060 Bergisch-Gladbach 3 (DE)**
Erfinder : **Swars, Helmut, Dipl.-Ing.**
**Riedweg 11**
**D-5060 Bergisch-Gladbach 1 (DE)**

(74) Vertreter : **Mehl, Ernst, Dipl.-Ing. et al**
**Postfach 22 01 76**
**D-8000 München 22 (DE)**

EP 0 170 187 B1

Jouve, 18, rue St-Denis, 75001 Paris, France

**Beschreibung**

Die vorliegende Erfindung betrifft ein Verfahren zum Herstellen von Antriebselementen nach dem Oberbegriff des ersten Anspruchs. Es sind z. B. Nockenwellen zur Steuerung von Verbrennungsmotoren bekannt, die nicht als einstückiges, an den Lagerflächen in aufwendiger Weise nachzubearbeitendes Schmiedestück hergestellt werden, sondern aus einem runden oder gegebenenfalls prismatischen Stab, auf den Nokken aus entsprechend geformten Stanzteilen aufgeschoben und anschließend mit dem Grundkörper verbunden werden, z. B. durch Schrumpfen, Schweißen oder durch Verschrauben (DE-U-79 20 957). Immerhin erfolgt hier die Fixierung der Nocken auf der Grundwelle in einem zweiten Arbeitsgang nach dem Aufschieben und Positionieren, und es ergibt sich das Problem, die notwendigerweise sehr präzise einzuhaltende Positionierung während der möglicherweise zwischen den beiden Arbeitsgängen erforderlichen Handhabung beizubehalten. In gleicher Weise ist die Erfindung anwendbar auf andere Antriebselemente, d. h. Teile mit zum Grundkörper konzentrischer, kreisförmiger Kontur, die als Zahnrad oder Lagerstelle für die Welle ausgebildet werden.

Aufgabe der vorliegenden Erfindung ist ein Verfahren, mit dessen Hilfe die aufgeschobenen Antriebselemente in einem Arbeitsgang mit dem Positionieren zumindest vorläufig so auf dem zylindrischen Grundkörper fixiert werden können, daß das zusammengesetzte Gebilde handhabbar wird, um weiteren Arbeitsgängen zugeführt werden zu können.

Die Lösung dieser Aufgabe erfolgt durch die im kennzeichnenden Teil des ersten Anspruchs angegebenen Mittel. Als Stanzteile, aus denen die Antriebselemente aufgebaut werden können, empfehlen sich solche, die mittels des als « Feinschneiden » bekannten Fertigungsprozesses hergestellt worden sind, da sie eine hohe Maßgenauigkeit und eine saubere Schnittfläche aufweisen, die ein Nachbearbeiten der mit anderen Elementen zusammenwirkenden Oberfläche weitgehend entbehrlich macht. Derartige Teile sihd jedoch nur in begrenzter Dicke herstellbar, so daß zum Aufbau eines Antriebselementes üblicher Breite mehrere dieser Teile benötigt werden, die kongruent aufeinandergelegt und anschließend miteinander verbunden werden. Die Anzahl solcher einzelner Scheiben kann ohne weiteres paarig gewählt werden, (wenn auch die einzelnen Scheiben eines Paares nicht notwendigerweise von derselben Dicke sein müssen), und zwar so, daß jeweils zwei Teile spiegelbildlich zueinander mit einer schräg zur Scheibenebene verlaufenden Bohrung versehen werden, durch die der Grundkörper hindurchgesteckt wird. Werden die so schräg auf dem Grundkörper stehenden Scheiben anschließend gewaltsam in die beabsichtigte, zur Wellenachse senkrechte Ebene gebracht, kerben die Scheibenkanten die Oberfläche des Grundkörpers ein und fixieren so die Scheiben auf demselben.

Unter Umständen reicht diese Fixierung aus, um das so geformte Antriebselement auch während des Betriebes auf der Welle festzuhalten ; ist dies nicht der Fall, empfiehlt sich die im zweiten Anspruch vorgeschlagene Ausgestaltung der Erfindung. Auf jeden Fall ist das Antriebselement ausreichend fixiert, um seine Position auf der Welle während eines Transportes z. B. zu einer Schweißanlage nicht mehr zu verändern, ohne daß dazu andere als herkömmliche Geräte eingesetzt werden müßten.

Eine stärkere Kerbwirkung und damit eine sicherere Befestigung kann gemäß der im dritten Anspruch vorgeschlagenen Ausgestaltung der Erfindung dadurch erzielt werden, daß die mit der Welle in Berührung kommende Oberfläche der Scheiben mit einer Riffelung oder dergleichen versehen wird.

Nach der im vierten Anspruch vorgeschlagenen weiteren Ausgestaltung der Erfindung brauchen von den auf dem Grundkörper zu fixierenden Teileines Antriebselementes nur die jeweils äußeren in der oben angegebenen Art ausgestaltet zu sein, während die dazwischen liegenden verhältnismäßig lose aufgeschoben sein können und durch die Endscheiben festgehalten werden. Um diese mittleren Teile in ihrer azimutalen Lage festzuhalten, können eine Vielzahl von z. B. auch stoff- oder kraftschlüssigen Verbindungen zu den Endscheiben angewendet werden. Es empfiehlt sich jedoch die im fünften Anspruch vorgeschlagene formschlüssige Befestigung.

Ein Ausführungsbeispiel der Erfindung ist in der Zeichnung dargestellt und zwar zeigt

Fig. 1 eine erste Ausführungsform im Längsaxialschnitt entsprechend der Linie I-I der Fig. 2,

Fig. 2 dieselbe im Querschnitt entsprechend der Linie II-II der Fig. 1,

Fig. 3 in vergrößertem Maßstab die Einzelheit III der Fig. 2,

Fig. 4 eine zweite Ausführungsform im Längsaxialschnitt entsprechend der Linie IV-IV der Fig. 5 und

Fig. 5 dieselbe im Querschnitt entsprechend der Linie V-V der Fig. 4, wobei jeweils die Lage der Einzelteile vor der Durchführung des Verfahrens durch strichpunktierte Linien angedeutet ist.

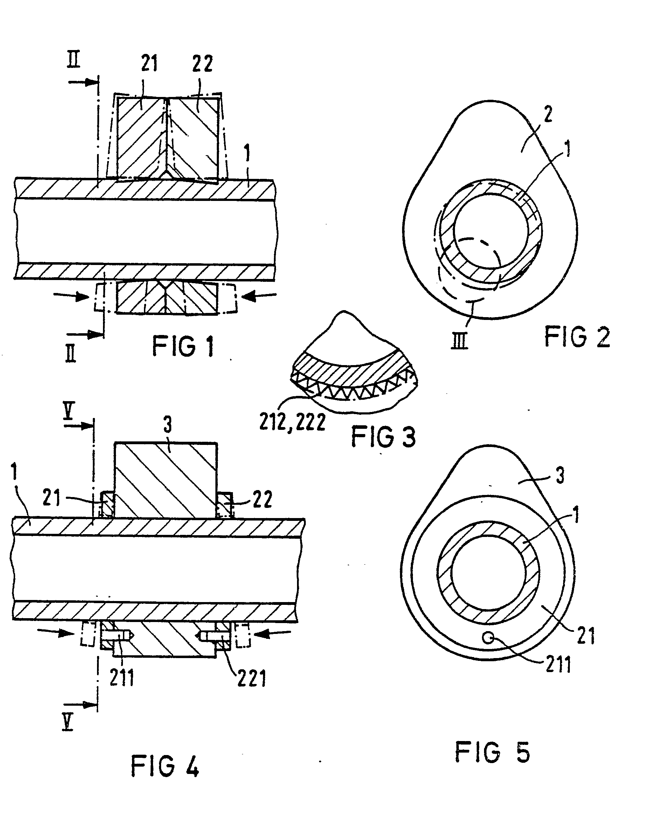

Eine Nockenwelle besteht aus einem gegebenenfalls hohlen, zylindrischen Grundkörper 1, der aus einem verhältnismäßig weichen Material hergestellt sein kann, da die dem Verschleißausgesetzten Oberflächen von Nocken 2 (oder ähnlichen Antriebselementen) besonders hergestellt werden ; dies geschieht, indem paarweise gestanzte Scheiben 21, 22 auf den Grundkörper 1 geschoben werden. Da die zur Aufnahme des Grundkörpers 1 vorgesehene Bohrung in diesen Teilen schräg zu ihrer Ebene verläuft, nehmen sie zunächst die strichpunktiert dargestellte Lage ein. Dabei erfolgt das Durchstecken des Grundkörpers 1 durch die entsprechenden Bohrungen der Teile 21, 22 während diese in hier nicht dargestellten beliebigen zangenartigen Werkzeugen gehalten werden. Wird anschließend auf die Backen dieser Zangen eine in Richtung der Pfeile verlaufende, gegenläufige Kraft aufgebracht, nehmen die scheibenförmigen Teile die in durchgezogenen Linien gezeigte endgültige Position ein, wobei sich deren Kante in die Oberfläche des Grundkörpers 1 eingräbt, da sie entsprechend ihrer beabsichtigten Verwendung als auf Verschleiß beanspruchte Teile aus einem härteren Material hergestellt sind. Zur Verbesserung der Kerbwirkung können die Scheiben 21, 22 mit einer Riffelung oder gleichwirkenden Oberflächenstruktur 212, 222 versehen sein (Fig. 3).

Bei der Ausführungsform gemäß der Fig. 4 und 5 bilden die Scheiben 21, 22 selbst kein Teil der Nockenkontur, sondern dienen nur der axialen Befestigung des zwischen Ihnen eingeklemmten eigentlichen Nockens 3. Um diesen auch in der azimutalen Richtung zu fixieren, sind Stifte 211, 221 vorgesehen, die in entsprechende Vertiefungen des weiteren Teils 3 greifen.

## Patentansprüche

1. Verfahren zum Herstellen einer Antriebswelle aus einem zylindrischen Grundkörper (1) mit aufgeschobenen Antriebselementen wie Nocken(2), Zahnrädern oder Lagerstellen, dadurch gekennzeichnet, daß

a) je Antriebselement (2) eine paarige Anzahl von Scheiben (21, 22) mit der gewünschten Kontur in eine kongruente Lage auf den Grundkörper (1) geschoben werden, wobei

a. a) die Achse der zum Hindurchstecken des Grundkörpers (1) dienenden Bohrung nicht senkrecht zur Oberfläche der Scheiben (21, 22) verläuft und

a. b) die Schräge der Bohrung für jedes Teil (21, 22) eines Scheibenpaares in spiegelbildlich einander entgegengesetzter Richtung verläuft und

b) die Scheiben (21, 22) zusammengepreßt werden, bis sie in eine zur Längsachse des Grundkörpers (1) senkrechte Ebene zu liegen kommen.

2. Verfahren nach Anspruch 1, dadurch gekennzeichnet, daß die Scheiben (21, 22) anschließend mit dem Grundkörper (1) in an sich bekannter Weise verschweißt, verlötet oder verklebt werden.

3. Verfahren nach Anspruch 1 oder 2, dadurch gekennzeichnet, daß die Scheiben (21, 22) vor dem Aufschieben auf den Grundkörper (1) an der mit demselben in Berührung kommenden Oberfläche in an sich bekannter Weise mit einer Riffelung oder dergleichen versehen werden.

4. Verfahren nach Anspruch 1, 2 oder 3, dadurch gekennzeichnet, daß

a) nur ein Scheibenpaar vorhanden ist und

b) diese Scheiben (21, 22) einen oder mehrere weitere, lose auf den Grundkörper (1) aufgeschobene Teile (3) einschließt.

5. Verfahren nach Anspruch 4, dadurch gekennzeichnet,

daß die Scheiben (21, 22) mit Befestigungsmitteln (211, 221) versehen werden, die formschlüssig in die weiteren Teile (3) eingreifen.

## Claims

1. A method for the manufacture of a drive shaft out of a cylindrical blank (1) with drive elements set on it, such as cams (2), gears or bearings, characterised in that

a) for each drive element (2) an even number of discs (21, 22) with the desired contour is set on the blank (1) in a congruent position, whereby

a. a) the axis of the bore which serves for the insertion of the blank (1) does not run perpendicular to the surface of the discs (21, 22) and

a. b) the inclination of the bore in each part (21, 22) of a pair of discs runs in a direction which is the mirror image of the bore in the other part and

b) the discs (21, 22) are pressed together, until they come to lie in a plane which is perpendicular to the longitudinal axis of the blank (1).

2. A method as claimed in claim 1, characterised in that the discs (21, 22) are subsequently welded, soldered or bonded to the blank (1), in a known way.

3. A method as claimed in claim 1 or 2, characterised in that the discs (21, 22), before being set on the blank (1), are provided with a corrugation or the like on the surface which comes into contact with the blank in a known way.

4. A method as claimed in claim 1, 2 or 3, characterised in that

a) only one pair of discs is present and

b) these discs (21, 22) have therebetween one or several further parts (3), set loosely on the blank (1).

5. A method as claimed in claim 4, characterised in that discs (21, 22) are provided with fastening means (211, 221), which interlock with the further parts (3) by virtue of their shape.

## Revendications

1. Procédé pour fabriquer un arbre d'entraînement constitué par un corps de base cylindrique (1) sur lequel sont emmanchés des organes d'entraînement tels que des cames (2), des pignons ou des coussinets de paliers caractérisé par le fait que

a) pour chaque organe d'entraînement (2), on emmanche un nombre pair de disques (21, 22) possédant le contour approprié, dans des positions alignées, sur le corps de base (1), auquel cas

a. a) l'axe du perçage utilisé pour l'enfichage du corps de base (1) n'est pas perpendiculaire à la surface des disques (21, 22), et

a. b) les inclinaisons des perçages prévus pour les éléments respectifs (21, 22) d'un couple de disques s'étendent dans des directions opposées symétriques, et

b) on comprime les disques (21, 22) l'un contre l'autre de manière qu'ils viennent s'appliquer l'un sur l'autre dans un plan perpendiculaire à l'axe longitudinal du corps de base (1).

2. Procédé suivant la revendication 1, caractérisé par le fait que l'on fixe ensuite, de façon connue en soi, par soudage, brasage ou collage, les disques (21, 22) au corps de base (1).

3. Procédé suivant la revendication 1 ou 2, caractérisé par le fait qu'avant de monter les disques (21, 22) sur le corps de base (1), on aménage de façon connue en soi un striage ou analogue sur la surface des disques, qui vient en contact avec le corps de base.

4. Procédé suivant la revendication 1, 2 ou 3, caractérisé par le fait que :

a) il n'est prévu qu'un couple de disques, et

b) ces disques (21, 22) enserrent entre eux un ou plusieurs autres éléments (3) emmanchés de façon lâche sur le corps de base (1).

5. Procédé suivant la revendication 4, caractérisé par le fait que l'on équipe les disques (21, 22) de moyens de fixation (211, 221), qui s'engagent selon une liaison par formes complémentaires dans les autres éléments (3).

FIG 1

FIG 2

212,222  FIG 3

FIG 4

FIG 5